(19) Europäisches Patentamt
European Patent Office
Office européen des brevets

(11) EP 4 446 836 A1

(12) EUROPEAN PATENT APPLICATION

(43) Date of publication:
16.10.2024 Bulletin 2024/42

(21) Application number: 24153700.0

(22) Date of filing: 24.01.2024

(51) International Patent Classification (IPC):
G05B 19/418 (2006.01)

(52) Cooperative Patent Classification (CPC):
G05B 19/41885; G05B 19/41875

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 12.04.2023 IN 202321027161

(71) Applicant: Tata Consultancy Services Limited
Maharashtra (IN)

(72) Inventors:
• KRISHNA, ANKUR
411013 Pune, Maharashtra (IN)
• BASAVARSU, PURUSHOTTHAM GAUTHAM
411013 Pune, Maharashtra (IN)
• BHOGINENI, SREEHARI KUMAR
560009 Bangalore, Karnataka (IN)

(74) Representative: Goddar, Heinz J.
Boehmert & Boehmert
Anwaltspartnerschaft mbB
Pettenkoferstrasse 22
80336 München (DE)

(54) SYSTEMS AND METHODS FOR MONITORING AND CONTROLLING A MANUFACTURING PROCESS USING CONTEXTUAL HYBRID DIGITAL TWIN

(57) This disclosure relates generally to systems and methods for monitoring and controlling a manufacturing process using contextual hybrid digital twin. Data pertaining to the manufacturing process is obtained from a plurality of data generation sources which is further inputted to one or more physics based models and train machine learning models such that simulated data and real time tata is obtained. Further, a gap between the simulated data and the real time data is determined and learnt. The learnt gap is further minimized and an augmented set of models are obtained. The augmented set of models along with a set of soft-sensing data is used to create the contextual hybrid digital twin for the manufacturing process. The performance of the manufacturing process is monitored and controlled using a performance analytics and decision making enablers of the contextual hybrid digital twin respectively in real time.

Obtaining, a first set of data and a second set of data pertaining to a manufacturing process from a plurality of data generation sources — 302

Inputting, the first set of data to a first set of models and the second set of data to train a second set of models — 304

Obtaining, (i) a plurality of simulated data from the first set of models and (ii) a plurality of real time experimental data from the second set of models — 306

Determining, a gap between the plurality of simulated data and the plurality of real time experimental data based on a comparison of key performance indicator vectors of the plurality of simulated data and the plurality of real time experimental data — 308

Learning, the determined gap by learning one or more gap behavioral patterns associated with the plurality of simulated data and the plurality of real time experimental data — 310

Minimizing, learnt gap by augmenting the one or more gap behavioral patterns associated with the plurality of simulated data with the first set of models to obtain an augmented set of models — 312

Creating, a contextual hybrid digital twin for the manufacturing process using a third set of data, wherein the third set of data is obtained by processing the augmented set of models using one or more soft sensing devices, and wherein the contextual hybrid digital twin comprises an information digital twin, a hybrid digital twin, and a self-learning enabler — 314

Performing, at least one of (i) monitoring and (ii) controlling a performance of the manufacturing process using a performance analytics module and a plurality of decision making enablers of the contextual hybrid digital twin respectively in real time — 316

FIG. 3

300

EP 4 446 836 A1

**Description**

CROSS-REFERENCE TO RELATED APPLICATIONS AND PRIORITY

The present application claims priority from Indian patent application, Application No. 202321027161, filed in India on April 12, 2023.

TECHNICAL FIELD

The disclosure herein generally relates to the field of manufacturing, and, more particularly, to systems and methods for monitoring and controlling a manufacturing process using contextual hybrid digital twin.

BACKGROUND

Real time monitoring of process and optimization of process parameters to reduce negative impact on a product are some of utmost important aspects towards a zero defect manufacturing operation. But processing of huge amount of data in real time and making right predictions using accurate models are some of the key challenges. As production systems vary from line to line and manufacturing plant to plant, making a generic and accurate model is also a difficult task. There are certain information such as state of machine, operator training, and environmental factors that affect the accuracy of the generic model for manufacturing process. There are a few conventional approaches that provide product design, manufacturing, and service driven by digital twin, but they lack in providing connection of the digital twin environment to control system of a physical equipment.

SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising obtaining, via one or more hardware processors, a first set of data and a second set of data pertaining to a manufacturing process from a plurality of data generation sources; inputting, via the one or more hardware processors, the first set of data to a first set of models and the second set of data, to train a second set of models; obtaining, via the one or more hardware processors, (i) a plurality of simulated data from the first set of models, and (ii) a plurality of real time experimental data from the second set of models; determining, via the one or more hardware processors, a gap between the plurality of simulated data and the plurality of real time experimental data, based on a comparison of one or more key performance indicator vectors of the plurality of simulated data and the plurality of real time experimental data; learning, via the one or more hardware processors, the determined gap by learning one or more gap behavioral patterns associated with the plurality of simulated data and the plurality of real time experimental data; minimizing, via the one or more hardware processors, learnt gap by augmenting the one or more gap behavioral patterns associated with the plurality of simulated data with the first set of models to obtain an augmented set of models; creating, via the one or more hardware processors, a contextual hybrid digital twin for the manufacturing process using a third set of data, wherein the third set of data is obtained by processing the augmented set of models using one or more soft sensing devices, and wherein the contextual hybrid digital twin comprises an information digital twin, a hybrid digital twin, and a self-learning enabler; and performing, via the one or more hardware processors, at least one of (i) monitoring and (ii) controlling a performance of the manufacturing process using a performance analytics module and a plurality of decision making enablers of the contextual hybrid digital twin respectively in real time.

In another aspect, a system is provided. The system comprising a memory storing instructions; one or more communication interfaces; a filter device; and one or more hardware processors coupled to the memory via the one or more communication interfaces, wherein the one or more hardware processors are configured by the instructions to: obtain a first set of data and a second set of data pertaining to a manufacturing process from a plurality of data generation sources; input the first set of data to a first set of models and the second set of data to train a second set of models; obtain (i) a plurality of simulated data from the first set of models and (ii) a plurality of real time experimental data from the second set of models; determine a gap between the plurality of simulated data and the plurality of real time experimental data based on a comparison of key performance indicator vectors of the plurality of simulated data and the plurality of real time experimental data; learn the determined gap by learning one or more gap behavioral patterns associated with the plurality of simulated data and the plurality of real time experimental data; minimize learnt gap by augmenting the one or more gap behavioral patterns associated with the plurality of simulated data with the first set of models to obtain an augmented set of models; create a contextual hybrid digital twin for the manufacturing process using a third set of data, wherein the third set of data is obtained by processing the augmented set of models using one or more soft sensing devices, and wherein the contextual hybrid digital twin comprises an information digital twin, a hybrid digital twin, and a self-learning enabler; and perform at least one of (i) monitoring and (ii) controlling a performance of the manufacturing process using a performance analytics module and a plurality of decision making enablers of the contextual hybrid digital twin respectively in real time.

In yet another aspect, a non-transitory computer readable medium is provided. The non-transitory computer readable medium are configured by instructions for obtaining, a first set of data and a second set of data pertaining to a manufacturing process from a plurality of data generation sources; inputting, the first set of data to a first set of models and the second set of data, to train a second set of models; obtaining, (i) a plurality of simulated data from the first set of models, and (ii) a plurality of real time experimental data from the second set of models; determining, a gap between the plurality of simulated data and the plurality of real time experimental data, based on a comparison of one or more key performance indicator vectors of the plurality of simulated data and the plurality of real time experimental data; learning, the determined gap by learning one or more gap behavioral patterns associated with the plurality of simulated data and the plurality of real time experimental data; minimizing, learnt gap by augmenting the one or more gap behavioral patterns associated with the plurality of simulated data with the first set of models to obtain an augmented set of models; creating, a contextual hybrid digital twin for the manufacturing process using a third set of data, wherein the third set of data is obtained by processing the augmented set of models using one or more soft sensing devices, and wherein the contextual hybrid digital twin comprises an information digital twin, a hybrid digital twin, and a self-learning enabler; and performing, at least one of (i) monitoring and (ii) controlling a performance of the manufacturing process using a performance analytics module and a plurality of decision making enablers of the contextual hybrid digital twin respectively in real time.

In accordance with an embodiment of the present disclosure, the first set of data is obtained as a plurality of data generated from a Design of Experiments (DoE) performed for the manufacturing process.

In accordance with an embodiment of the present disclosure, the second set of data is obtained from at least one of (i) one or more machines associated with the manufacturing process in real time, (ii) a plurality of sub-processes associated with the manufacturing process in real time, and (iii) the plurality of first set of data being continuously processed by the one or more machines, and the plurality of sub-processes associated with the manufacturing process.

In accordance with an embodiment of the present disclosure, the first set of models comprises one or more physics based models, and the second set of models comprises (i) one or more machine learning models and (ii) one or more neural network models.

In accordance with an embodiment of the present disclosure, the information digital twin is a complex graph model having a hierarchical structure storing information on relationship between one or more entities associated with the manufacturing process.

In accordance with an embodiment of the present disclosure, the information digital twin provides context to a generated data for reasoning and querying the generated data using a semantic layer.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for monitoring and controlling a manufacturing process using contextual hybrid digital twin according to some embodiments of the present disclosure.

FIG. 2 is a functional block diagram of the system of FIG. 1 for monitoring and controlling a manufacturing process using contextual hybrid digital twin according to some embodiments of the present disclosure.

FIG. 3 illustrates an exemplary flow diagram illustrating a method for monitoring and controlling a manufacturing process using contextual hybrid digital twin in accordance with some embodiments of the present disclosure.

FIG. 4 illustrates a block diagram illustrating execution of the contextual hybrid digital twin in real time for monitoring and controlling a manufacturing process according to some embodiments of the present disclosure.

FIG. 5 depicts a schematic diagram of experimental set up for monitoring and controlling a friction stir welding process using contextual hybrid digital twin according to some embodiments of the present disclosure.

FIG. 6 depicts a representation of LabView® interface for monitoring and controlling the Friction Stir Welding (FSW) process using the contextual hybrid digital twin according to some embodiments of the present disclosure.

FIG. 7 depicts three-dimensional representations of boundary conditions of a FSW model for monitoring and controlling FSW process using the contextual hybrid digital twin according to some embodiments of the present disclosure.

FIG. 8 depicts three-dimensional representations of meshing conditions, model assumptions, interaction as well as boundary conditions of the FSW model respectively for monitoring and controlling FSW process using the contextual hybrid digital twin according to some embodiments of the present disclosure.

FIGS. 9A through 9C depict a temperature contour plot, a strain contour plot and a force signal plot respectively for monitoring and controlling FSW process using the contextual hybrid digital twin according to some embodiments of the present disclosure.

FIG. 10 illustrates a conceptual structure of a conventional information digital twin used by the system 100 for monitoring and controlling FSW process using the contextual hybrid digital twin according to some embodiments of the present disclosure.

FIGS. 11A and 11B depict pictures of welded workpiece sample to achieve different UTS values for monitoring and controlling the FSW process using the contextual hybrid digital twin according to some embodiments of the present disclosure.

FIGS. 12A and 12B depict pictures of welded workpiece sample indicating the tensile sample region to achieve different UTS values for monitoring and controlling the FSW process using the contextual hybrid digital twin according to some embodiments of the present disclosure.

FIG. 13 depicts a graphical representation illustrating a comparison of the predicted and the actual UTS value of the weld samples with and without soft sensor data and augmentation for monitoring and controlling the FSW process using the contextual hybrid digital twin according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Embodiments of the present disclosure provide systems and methods for monitoring and controlling a manufacturing process using contextual hybrid digital twin. In the context of the present disclosure, the expression 'a digital twin' refers to an up to date digital replica of a process, product, or service. The digital twin takes real time data from its physical counterpart to update parameters with in it. An accurate digital twin further comprises of an Artificial Intelligence (AI) based and physics based models to mimic physical behavior of a system or a process. Further, in the context of the present disclosure, the expression 'contextual hybrid digital twin' refers to an associate with a particular process or machine that uses machine or process data and simulation to learn accurate behavior of the machine or the process. Since the contextual hybrid digital twin uses both physics and data to replicate the machine or process, it is robust and have high applicability. The method of the present disclosure utilizes the contextual hybrid digital twin to accurately monitor and optimize process parameters in manufacturing operation in real time.

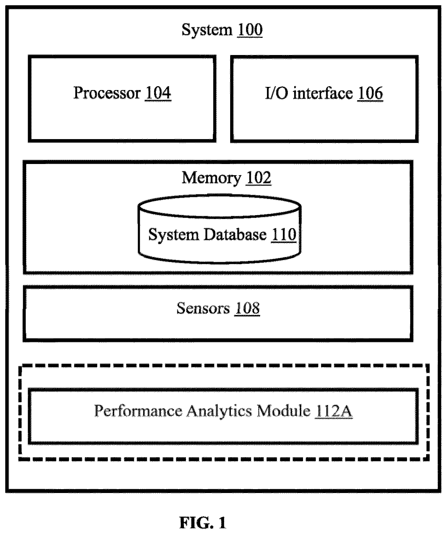

Referring now to the drawings, and more particularly to FIGS. 1 through 13, where similar reference characters denote corresponding features consistently throughout the figures, there are shown preferred embodiments and these embodiments are described in the context of the following exemplary system and/or method.

FIG. 1 illustrates an exemplary system for monitoring and controlling a manufacturing process using contextual hybrid digital twin according to some embodiments of the present disclosure.

In an embodiment, the system 100 includes one or more hardware processors 104, communication interface device(s) or input/output (I/O) interface(s) 106 (also referred as interface(s)), one or more sensors 108, and one or more data storage devices or memory 102 operatively coupled to the one or more hardware processors 104. The one or more processors 104 may be one or more software processing components and/or hardware processors. In an embodiment, the hardware processors can be implemented as one or more actuators, one or more general scene processor, one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and edge device and the like.

The I/O interface device(s) 106 can include a variety of software and hardware interfaces, for example, a web interface, a graphical user interface, a human-machine interface provided by a communication layer and the like and can facilitate multiple communications within a wide variety of networks N/W 5 and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as Static Random-Access Memory (SRAM) and Dynamic Random-Access memory (DRAM), and/or nonvolatile memory, such as Read-Only Memory (ROM), erasable programmable ROM, flash memories, hard disks, optical disks, and magnetic tapes. In an embodiment, a system database 110 is comprised in the memory 102, wherein the system database 110 further comprises a data lake that provides a scalable and secure platform for allowing enterprises to ingest any data from any system at any speed even if the data comes from on-premises, cloud, or edge-computing systems, store any type or volume of data in full fidelity, process data in real time or batch mode, and analyze data using a programming language including SQL, Python, R, or any other language, third-party data, or analytics application. The data lake further comprises (i) one or more models including one or more machine learning, one or more deep learning models, and one or more physics based models, (ii) a plurality of informative data associated with the trained one or more machine learning or deep learning models and (iii) cleaned machine or manufacturing process data.

The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

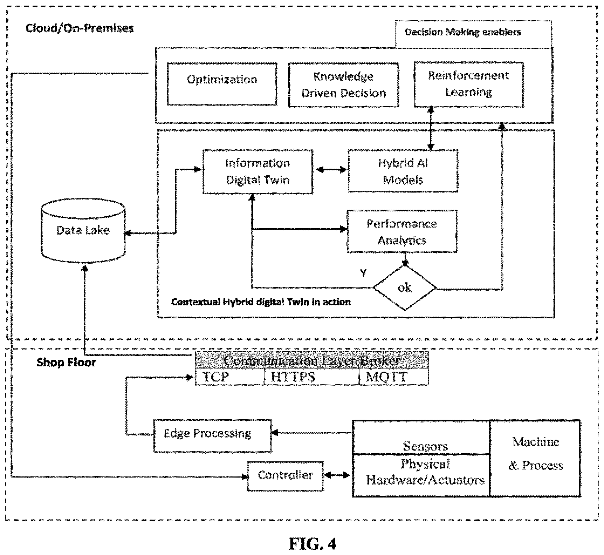

The one or more sensors 108 may include one or more physical sensors and one or more soft sensors. The one or more physical sensors are physical device which measures physical properties. The one or more physical sensors should be placed at optimum place to record correct data without much noise. Calibration of the one or more physical sensors needs to be done to get reliable data. The one or more soft sensors are software based sensors that further enhance the machine learning model performance and robustness. The system 100 is configured to process and analyze the received data in accordance with one or more modules 112 such as performance analytic module 112A, further explained in conjunction with FIG. 4.

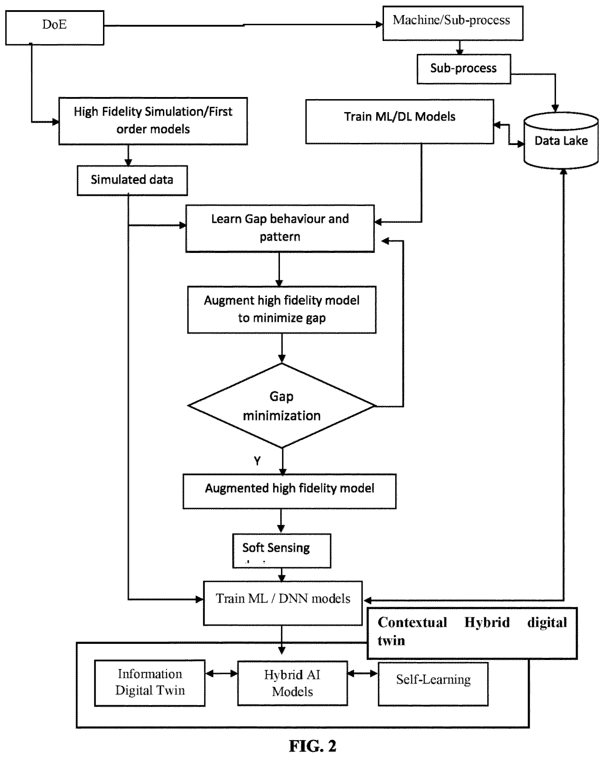

FIG. 2, with reference to FIG. 1, is a functional block diagram of the system of FIG. 1 for monitoring and controlling a manufacturing process using contextual hybrid digital twin according to some embodiments of the present disclosure.

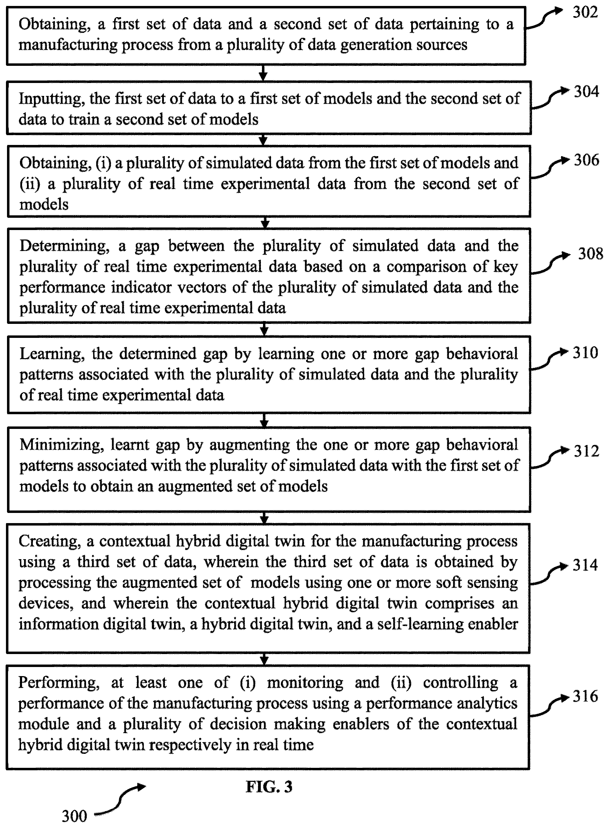

FIG. 3, with reference to FIGS. 1-2, illustrates an exemplary flow diagram illustrating a method for monitoring and controlling a manufacturing process using contextual hybrid digital twin in accordance with some embodiments of the present disclosure. Referring to FIG. 3, in an embodiment, the system(s) 100 comprises one or more data storage devices or the memory 102 operatively coupled to the one or more hardware processors 104 and is configured to store instructions for execution of steps of the method by the one or more processors 104. The steps of the method 300 of the present disclosure will now be explained with reference to components of the system 100 of FIG. 1, the block diagram of FIG. 2, the flow diagram as depicted in FIG. 3, the block diagram of FIG. 4, and one or more examples. In an embodiment, at step 302 of the present disclosure, the one or more hardware processors 104 are configured to obtain a first set of data and a second set of data pertaining to a manufacturing process from a plurality of data generation sources. The first set of data is obtained as a plurality of data generated from Design of Experiments (DoE) performed for the manufacturing process. As shown in FIG. 2, the data is generated from Design of Experiments (DoE) performed for the manufacturing process. DoE helps in generating input data for experiments (alternatively referred as runs) and simulation in efficient way. It covers design space and reduces unexplored regions. DoE could be used for data generation if no previous data related to plant or machine is available. DoE generates input conditions for a specific real time manufacturing operation (e.g., welding operation). Example of DoE algorithms and application may include but not limited to Latin hypercube, Full Factorial, Random Forest, and/or the like. The second set of data is obtained from at least one of (i) one or more machines associated with the manufacturing process in real time, (ii) a plurality of sub-processes associated with the manufacturing process in real time, and (iii) the plurality of first set of data being continuously processed by the one or more machines and the plurality of sub-processes associated with the manufacturing process. As shown in FIG. 2, the one or more machines and the plurality of sub-processes generate data during operations which are collected with help of external and internal sensors. The collected data is processed and stored for analysis and training of one or more models. The one or more machine data and the plurality of sub-process data is cleaned and stored in the data lake for further consumption. It is used in training of machine learning or deep learning (ML/DL) models and developing process insights.

In an embodiment, at step 304 of the present disclosure, the one or more hardware processors 104 are configured to input, the first set of data to a first set of models and the second set of data to train a second set of models. The first set of models comprises one or more physics based models and the second set of models comprises (i) one or more machine learning (ML) models and (ii) one or more neural network models. The one or more neural networks may include but not limited to deep neural networks. Machine learning models such as classical ML or deep neural network (DNN) models are trained for predicted Key Performance Indicators (KPIs). Model uses historical data to learn expected outcome using ML and DL algorithm. The one or more physics based models may include but not limited to numerical models such as finite element analytical models, high fidelity simulation models or first order models which are highly accurate physics-based models based on first principle models. Creating high fidelity simulation models for machine or sub-process/process is a complicated task and requires significant computational power. These models can be used to fill the gap where historical data is not present.

In an embodiment, at step 306 of the present disclosure, the one or more hardware processors 104 are configured to obtain (i) a plurality of simulated data from the first set of models, and (ii) a plurality of real time experimental data from the second set of models. Data obtained from the high fidelity simulation models is known as simulated data. Data obtained from the machine or the plurality of sub-processes through the one or more physical sensors (alternatively referred as hard sensors) is the plurality of real time experimental data.

In an embodiment, at step 308 of the present disclosure, the one or more hardware processors 104 are configured to determine a gap between the plurality of simulated data and the plurality of real time experimental data based on a comparison of one or more key performance indicator vectors of the plurality of simulated data and the plurality of real time experimental data. Gaps may exist between the plurality of simulated and the plurality of real time experimental data as all the factors affecting the plurality of sub-process/process or machine such as machine degradation state, variation in environmental conditions, human factors are difficult to model. In the context of the present disclosure, the determined gap is interchangeably referred as 'real to simulation gap' throughout the description. Real to Simulation Gap is expressed as shown in equation (1) below:

$$Real\ to\ Simulation\ Gap\ (G_i)\ =\ |Y_{ri} - Y_{si}| \qquad (1)$$

Here, $Y_{ri}$ and $Y_{si}$ are real and simulated key performance indicator vectors and $i$ = 1, 2 .... $n$ indicating number of process parameter vector.

In an embodiment, at step 310 of the present disclosure, the one or more hardware processors 104 are configured to learn the determined gap by learning one or more gap behavioral patterns associated with the plurality of simulated data and the plurality of real time experimental data. The determined gap is learnt by using a separate set of MI,/DL models that are different from the second set of models. Classical machine learning and deep learning techniques are used to learn the one or more gap behavioral patterns associated with the plurality of simulated data and the plurality of real time experimental data. For instance, it is assumed that $Y_{ri}$ and $Y_{si}$ are the key performance indicator vectors of the plurality of simulated data and the plurality of real time experimental data respectively and where $i$ = 1,2,3 ... $n$. Here, $n$ is number of key performance indicator vectors of the plurality of simulated data and the plurality of real time experimental data. Then, the gap between real and simulated key performance indicator (KPI) vectors can be estimated as shown in equation (2) below:

$$G_k = \frac{\sum_{i=1}^{n} \frac{|Yri - Ysi|}{Ysi}}{N} \qquad (2)$$

Here, $N = \sum_{1}^{n} i$ which represents total no of process parameter vector and $k$ = 1, 2, ... $r$ that represents total no of rows in the plurality of simulated data and the plurality of real time experimental data. Deep neural network (DNN) is trained for input KPI vectors and the gap $G_k$. Weight of the deep neural network is adjected using back propagation algorithm. The Deep neural network learns the one or more gap behavioral patterns that are due to all factors affecting the manufacturing process or the one or more machine. These factors may include but not limited to machine degradation state, variation in environmental conditions, human factors which are difficult to model. The learnt gap is stored in deep neural nets.

In an embodiment, at step 312 of the present disclosure, the one or more hardware processors 104 are configured to minimize the learnt gap by augmenting the one or more gap behavioral patterns associated with the plurality of simulated data with the first set of models to obtain an augmented set of models. In the present disclosure, the objective is minimizing real to simulation gap and use simulation to train ML model to improve robustness and accuracy. The leant gap is further used to augment the High Fidelity Simulation or first order models to minimize the real to simulation gap. The augmented set of models represent augmented simulated model which is given by equation (3) below:

$$Y_{ri} = (1 + G_k) * Y_{si}\ +\ \epsilon_i \qquad (3)$$

Here, $i$ = 1, 2, 3 ... $n$ represents number of key performance indicator vectors, $\varepsilon_i$ is error vector between output key performance indicator vector estimated from the plurality of real experimental data and the plurality of simulated data, and the expressions $(1 + G_k) * Y_{si}$ represents the one or more gap behavioral patterns. The value of $\varepsilon_i$ is tuned using error minimization methods such as least square method, entropy minimization. Once $\varepsilon_i$ is tuned, it can be further used along equation (3) to minimize the real to simulation gap. If the real to simulation gap estimated from equation (1) is higher than a set threshold (for example, > 5%), then steps 310 and 312 are repeated, till the simulation gap is below the set threshold. In other words, once $\varepsilon_i$ is tuned, it is used along with the equation (3) to argument High Fidelity Simulation or First order models. The augmented set of models are more accurate and robust since they have learnt unmodelled behavior.

In an embodiment, at step 314 of the present disclosure, the one or more hardware processors 104 are configured to create a contextual hybrid digital twin for the manufacturing process using a third set of data. The third set of data is obtained by processing the augmented set of models using one or more soft sensing devices. In industrial operations, some product qualities and key process parameters are always difficult to measure. But these parameters possess critical information. Augmented high fidelity model can replace need of physical hard sensor and soft sensor which are difficult and non-economical to deploy. The soft sensors further enhance the machine learning model performance and robustness since it provides additional feature vector to the algorithm. The data generated from the augmented high fidelity model along with soft sensing device data are used to train machine learning and deep learning neural networks. Since, design of Experiment (DoE) algorithms generate input for augmented high-fidelity system, it covers design space uniformly which make machine learning model to learn expected behavior of machine and process under different states. Soft sensing devices provide addition input feature vector during training which make model robust and stable.

The contextual hybrid digital twin is an up to date copy of its physical counterpart. In an embodiment, the contextual hybrid digital twin comprises an information digital twin, a hybrid digital twin, and a self-learning enabler. The information digital twin is a complex graph model having a hierarchical structure where relationship between one or more entities associated with the manufacturing process is stored. The information digital twin provides context to generated data which helps in reasoning and querying using a semantic layer. There are several state in the art platform and software available for data contextualization such as TCS PREMAP meta models (e.g., refer 'US10579745B2' titled 'Model driven computational platform for integrated design of products, materials and manufacturing processes'), Cognite®, Azure® digital twins, and/or the like. The hybrid digital twin is a trained artificial intelligence (AI) model using augmented simulation data. The AI model helps in predicting behavior of physics system or process with real time data from its counterpart. The self-leaning enabler continuously checks the performance of hybrid AI model. In case of any drift, the self-learning enabler retrain the AI model by repeating the steps 302 through 314.).

In an embodiment, at step 316 of the present disclosure, the one or more hardware processors 104 are configured to perform at least one of (i) monitoring, and (ii) controlling a performance of the manufacturing process using a performance analytics module and a plurality of decision making enablers of the contextual hybrid digital twin respectively in real time. FIG. 4 illustrates a block diagram illustrating execution of the contextual hybrid digital twin in real time for monitoring and controlling a manufacturing process according to some embodiments of the present disclosure. As shown in FIG. 4, execution framework of the contextual hybrid digital twin comprises one or more machines and one or more sub-processes. The one or more machines execute the one or more sub-processes and generate the one or more sub-processes through sensors. The one or more machines and one or more sub-processes need to be continuously evaluated for better production and quality control. The execution framework of the contextual hybrid digital twin further comprises sensors, actuators, controllers, edge processing, a communication layer/broker, the data lake, the information digital twin, the hybrid AI model, the performance analytics module, the plurality of decision making enablers.

The sensors are physical device which measure physical properties and are required to be placed at optimum places to record correct data without much noise. Calibration of the sensors needs to be done to get reliable data. Controllers generates control signal to reduce the gap between actual and desire value of key performance indicator vectors. Controller generally works on set logics but deviation of system itself from original state cause controller to fail in setting right set points. The control logic needs to be modified after change in state of physical system is detected from original state. Here, the plurality of decision making enablers provide input to controller during the state change. Actuators are controls mechanism of machine to get desire setting set by the controller. Actuators sets machine in desire state to perform specific task. In an embodiment, the term edge processing (alternatively referred as edge computing) refers to processing at the edge of the client. For example, on the client's local computer, or in an internet of things (IoT) device, or on an edge server that is connected to the internet and near to the client. Instead of sending data to a data centre or main cloud, edge computing processes or analyses data on the device itself. As a result, long-distance communications between client and server are minimized by bringing the computation to network's edge. Real-time data processing is also accelerated by reducing latency, bandwidth usage, and strain on main servers.

The function of the communication layer is to provide Human-machine interfaces, which links all layers in the executional framework and provides links for transmitting data between consumers and producers using one or more protocols such as Transmission Control Protocol (TCP), Hypertext Transfer Protocol Secure (HTTPS), and Message Queuing Telemetry Transport (MQTT). Additionally, the communication layer manages communication between factory devices within a vast industrial area to concentrate data collection, processing, visualization, and archiving. Brokers or data brokers act as mediators between data producers and consumers. It supervises and records each data exchange transaction and provides a rollback in the event of incomplete or faulty exchanges. The brokers also provide quality related services such as data analysis.

In an embodiment, the concept of performance analytics refers to the collection and analysis of data in an integrated system. Rather than reporting on a point in time, the performance analytics module 112A tracks, aggregates, and visualizes the key performance indicator vectors over time. The performance analytics module 112A compare system or process performance with benchmark one. If any deviation is detected, it is reported back to the information digital twin. The performance analytics module is used to monitor the performance of the manufacturing process, output of which is further fed to the plurality of decision making enablers to control the performance of the manufacturing process. The plurality of decision making enablers may execute optimization, knowledge-driven decision support systems, and reinforcement learning. Optimizations in manufacturing involve inputs and adjustments from the entire production process. In order to make the production process as fast and efficient as possible, excess waste must be eliminated at the same time. Optimizing production processes can lead to a reduction in production delays, improved product quality, better visibility into operations, and better resource allocation. The knowledge-driven decision support systems provide targeted users with suggestions or recommendations. The knowledge-driven decision support system has specialized problem-solving expertise related to a specific task. In order to demonstrate expertise, one must know about a particular domain and understand the problems within it, as well as be able to solve one or more of those problems. There are several characteristics of knowledge-driven decisions, including the ability to backtrack, display confidence and certainty information, find explanations of how, why questions, initiate actions, choose outputs, analyse resumes, retrieve data about specific cases, store inputs, results and user actions, train users, and/or the like. The plurality of decision making enablers also execute reinforcement learning (RL). Artificial intelligence relies heavily on the reinforcement learning. In RL, by performing actions and observing their results, an agent learns to behave in an environment through feedback-based machine learning. When the agent performs a good action, he receives positive feedback, and when he performs a bad action, he receives negative feedback. Learning by RL involves relying on feedback rather than labelled data, unlike supervised learning. Without any labelled data, the agent must learn from experience alone since no labelled data exists. RL can solve long-term problems when a sequential decision-making process is used, and a long-term decision is a goal. To improve their performance, RL agents are motivated by positive rewards. Based on experience from hit-and-trials, the RL agent becomes better at a task over time. An intelligent agent (computer program) learns how to act within its environment through RL, a form of machine learning.

**Experimental Validation:**

In an embodiment, the system and method of the present disclosure are validated using a case study of a use case example of Friction Stir Welding (FSW). FSW has proved to be one of the emerging techniques for joining aluminum. AA6061 sheets with a thickness of 3 mm were used in this study for FSW in a butt joint configuration. Welds were produced using a H13 steel tool with the following features: (a) 18 mm diameter flat shoulder (b) conical pin with 6 mm upper diameter and 4 mm lower diameters and a length of 2.7 mm. Design of Experiments (DoE) were performed and 42 combinations of key performance indicator vectors (interchangeable referred as process parameters) were chosen to accomplish FSW and generate data on a FSW machine (e.g., WS004, ETA Technology). Table 1 below provides all 42 combinations of key performance indicator vectors:

Table 1

| $\nu$ (mm/min) $\rightarrow$<br><br>$\omega$ (rpm) $\downarrow$ | 40 | 50 | 60 | 80 | 100 | 150 | 200 |
|---|---|---|---|---|---|---|---|
| 600 | E1+S1<br>**600-40** | E2+S2<br>**600-50** | E3+S3<br>**600-60** | E4+S4<br>**600-80** | E5+S5<br>**600-100** | E6+S6<br>**600-150** | E7+S7<br>600-200 |
| 1000 | E8+S8<br>**1000-40** | E9+S9<br>**1000-50** | E10+S1 0<br>**1000-60** | E11+S1 1<br>**1000-80** | E12+S1 2<br>**1000-100** | E13+S1 3<br>**1000-150** | E14+S1 4<br>**1000-200** |
| 1400 | E15+S1 5<br>**1400-40** | E16+S1 6<br>**1400-50** | E17+S1 7<br>**1400-60** | E18+S1 8<br>**1400-80** | E19+S1 9<br>**1400-100** | E20+S2 0<br>**1400-150** | E21+S2 1<br>**1400-200** |
| 1800 | E22+S2 2<br>**1800-40** | E23+S2 3<br>**1800-50** | E24+S2 4<br>**1800-60** | E25+S2 5<br>**1800-80** | E26+S2 6<br>**1800-100** | E27+S2 7<br>**1800-150** | E28+S2 8<br>**1800-200** |

(continued)

| $\nu$ (mm/min) $\rightarrow$ $\omega$ (rpm) $\downarrow$ | 40 | 50 | 60 | 80 | 100 | 150 | 200 |
|---|---|---|---|---|---|---|---|
| 2200 | E29+S2 9 2200-40 | E30+S3 0 2200-50 | E31+S3 1 2200-60 | E32+S3 2 2200-80 | E33+S3 3 2200-100 | E34+S3 4 2200-150 | E35+S3 5 2200-200 |
| 2600 | E36+S3 6 2600-40 | E37+S3 7 2600-50 | E38+S3 8 2600-60 | E39+S3 9 2600-80 | E40+S4 0 2600-100 | E41+S4 1 2600-150 | E42+S4 2 2600-200 |

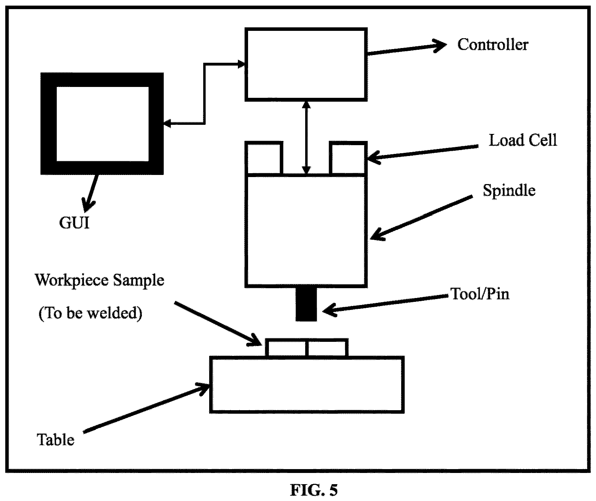

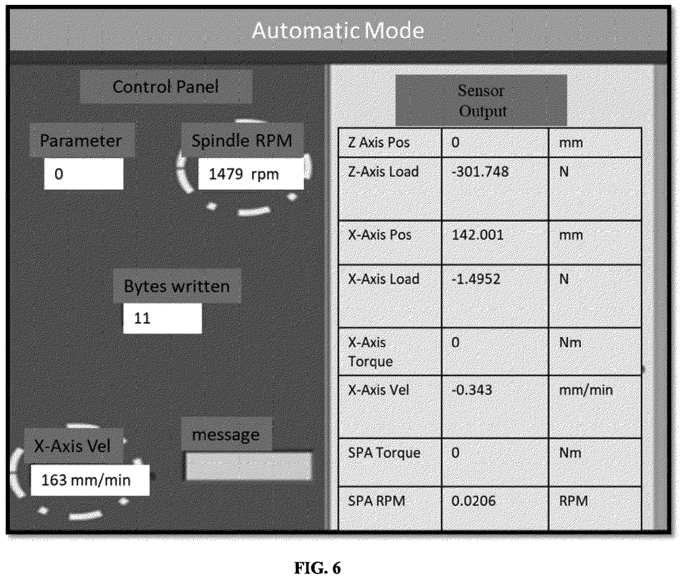

FIG. 5 depicts a schematic diagram of an experimental set up for monitoring and controlling the friction stir welding process using contextual hybrid digital twin according to some embodiments of the present disclosure. As shown in FIG. 5, a graphical user interface (GUI) is attached to the control panel of the machine where the parameters for welding a workpiece sample are provided as inputs to the process, such as starting position of weld and end position of weld, an/or the like. In an embodiment, the workpiece sample to be welded could be of any shape and size. For example, the workpiece samples could be but not limited to few metallic plates of cubic, cuboidal and cylindrical shape. GUI has been created in Lab View® software, for the purpose of receiving data from two sensors and, by using transmission control protocol/internet protocol (TCP/IP), transferring them to the server. The TCP/IP protocol utilizes a "client/server" model, in which the "client" is a machine that receives services from another computer called "server" using a network. The IP address of the FSW machine is included in the client. Python script communicates with Lab View® and a real-time digital signal can be sent and received through in it, allowing the parameters to be controlled in real-time. It was necessary to set up a connection in Lab View® for the integration of the model. Firstly, the GUI needs to be opened on the machine for the machine to be controlled online and the process to begin. Afterwards, the manual mode of the experiment is chosen, and the x-start position, the end position, the z-feed and the rapid position are calculated manually prior to the experiment to ensure accuracy. Depth of penetration ($p$) was determined by manually moving the spindle with the mounted FSW tool downwards prior to the experiment. Manual tilting ($\alpha$) of the spindle head is also performed prior to the experiments because $p$ and $\alpha$ cannot be controlled online while welding with the current FSW machine. FSW is monitored and controlled using force and torque signals with the help of a load cell built into the FSW machine. FIG. 6 depicts a representation of LabView® interface for monitoring and controlling the friction stir welding (FWS) process using the contextual hybrid digital twin according to some embodiments of the present disclosure. Using the LabView® interface, all these parameters are included on the block diagram of the AUTO MODE to rebuild the application as shown in FIG. 6. A TCP/IP connection is also being used for receiving welding parameters from the edge to the FSW machine as part of this process. The receiving unit in LabView® receives the modified parameters. As a result, it changes the values of $\omega$ and $v$ in real time. To receiving and sending data during the welding process, TCP/IP blocks are used to address the receiving and sending of data. To change the value of $\omega$, 0 is sent first, followed by the desired value. In a similar way, to change $v$, 1 is sent first, followed by the value that is desired.

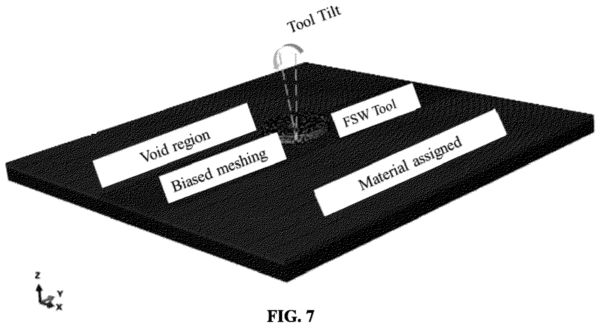

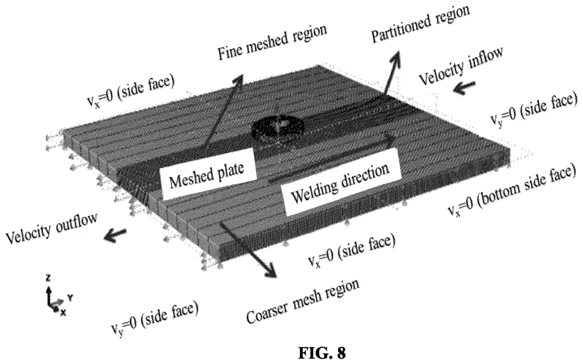

After successful FSW experiments, an ABAQUS/Explicit software was used in order to simulate FSW with a two-way coupled nonlinear transient thermomechanical model, where the workpiece selected is Eulerian body and the tool selected is Lagrangian body. Both friction and plastic deformation were incorporated in the FSW model which are responsible for heat generation in FSW. Workpiece and tool dimensions and materials were consistent with the experiments. Workpieces were divided into two domains to define void regions having 1 mm thickness where no material properties were assigned, and material-assigned regions having 3 mm thickness. Flow stress definition determines the accuracy of simulation results. Temperature, strain, and strain-rate affect flow stress in FSW which is a multi-physics process. In the present disclosure, Johnson Cook (JC) model was assigned to define material flow stress because for high-strain-rate processes. The JC model is best fit as it is a strain-rate, temperature-dependent viscoplastic model. All contacts between tool and workpiece were defined as general contact interactions. Penalty contact algorithms and hard contact pressure enclosures were defined for tangential and normal formulations, respectively. At the interface, Coulomb's law of friction is defined by 0.8 coefficient of friction. FIG. 7 depicts three-dimensional representations of boundary conditions of a FSW model for monitoring and controlling FSW process using the contextual hybrid digital twin according to some embodiments of the present disclosure. FIG. 8 depicts three-dimensional representations of meshing conditions, model assumptions, interaction as well as boundary conditions of the FSW model respectively for monitoring and controlling FSW process using the contextual hybrid digital twin according to some embodiments of the present disclosure. The FSW model assumptions include (i) defining the tool as a rigid body, (ii) using a simple coulomb's model to capture tangential contact condition between the tool and the workpiece, (iii) no consideration of microstructural behavior of the workpiece by the FSW model, (iv) neglecting backing plate to reduce the computational time. The meshing conditions include for the workpiece are (i) eight-noded thermally coupled linear Eulerian brick elements (EC3D8RT) with reduced integration and hourglass control is used, and (ii) finer mesh (0.5mm) at processing zone and coarser mesh (4mm) is uses for the rest of domain with elements. The meshing conditions for the tool are (i) eight-noded thermally coupled brick trilinear displacement and temperature, and reduced integration (C3D8RT) is used, and (ii) mesh size of 0.5mm with total elements is used. The interaction conditions are (i) the tool and the workpiece have multiple contacts; tool pin with workpiece and self-contact within the workpiece surface, (ii) general contact interaction to incorporate all contacts between the tool and the workpiece, and (iii) for tangential and normal formulation, penalty contact algorithm and hard contact pressure enclosure were defined respectively. Further, the boundary conditions of the FSW model include (i) coulomb's law of friction at the interface with a coefficient of friction of 0.8, (ii) assigning a rotational speed to the tool for all the phases of FSW and velocity of the material from side faces is constrained in perpendicular direction, (iii) frictional heat factor defined as 1.0, (iv) frictional heat factor defined as 0.9, (v) natural convection between workpiece/tool surface and environment with a convective heat transfer coefficient of 25 W/m$^2$ $^0$C and a convective heat transfer coefficient of 4000 W/m$^2$ $^0$C between the workpiece bottom surface and environment, and (vi) heat partitioning between the tool and plates.

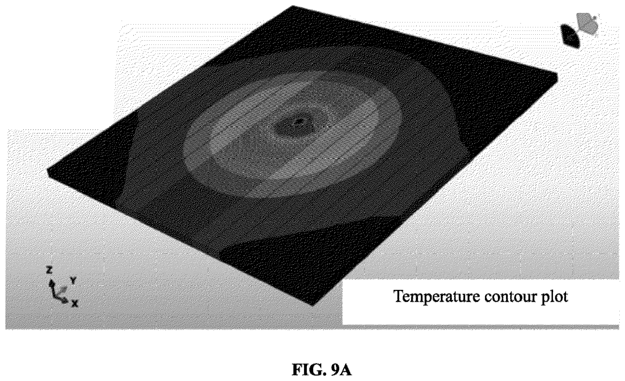

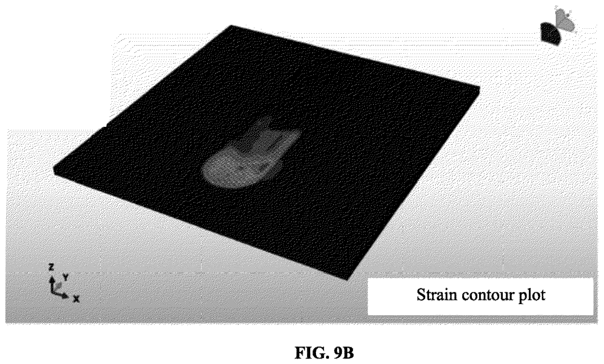

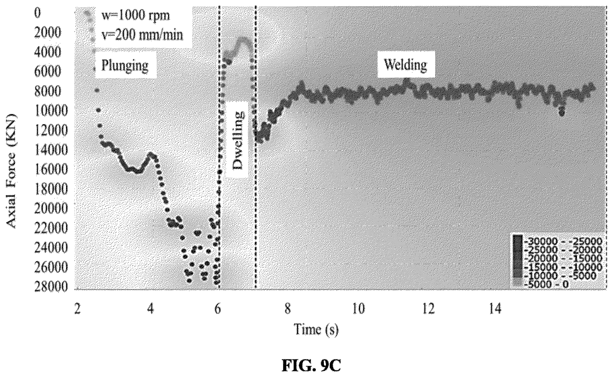

FIGS. 9A through 9C depict a temperature contour plot, a strain contour plot and a force signal plot respectively for monitoring and controlling FSW process using the contextual hybrid digital twin according to some embodiments of the present disclosure. Here, the simulated average welding force value was validated with experimental force value. For all the 42 combinations of the key performance indicator vectors, the percentage error was within 15%.

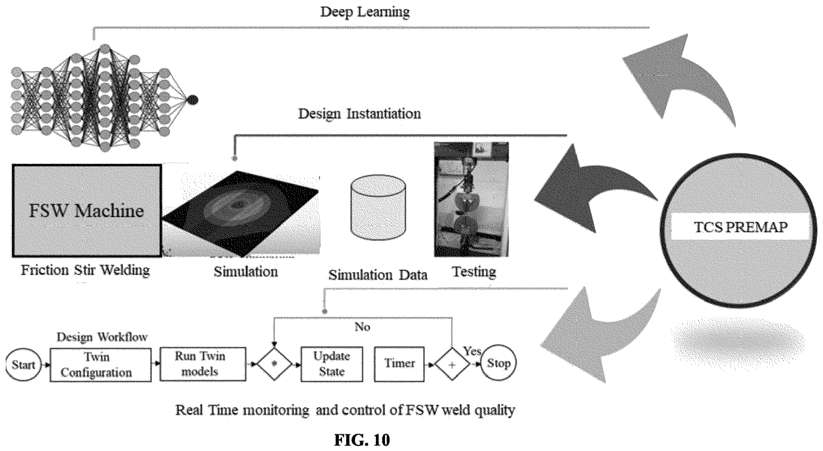

FIG. 10 illustrates a conceptual structure of a conventional information digital twin used by the system 100 for monitoring and controlling FSW process using the contextual hybrid digital twin according to some embodiments of the present disclosure. In an embodiment, the conventional information digital twin used is 'TCS PREMAP platform' and its integration to ABAQUS for simulations is performed. TCS PREMAP is an IT platform, enriched with various tools for modelling and simulation and supported by informatics, knowledge engineering, collaboration, robust design, and decision support tools along with appropriate databases and knowledge bases that will facilitate the simultaneous exploration of the material and product design spaces. At the beginning, the FSW model was built in ABAQUS, and a macro file had to be created to run the FSW model. The Macro Manager allows to record a sequence of ABAQUS Scripting Interface commands in a macro file while interacting with ABAQUS/CAE. FSW ontology was developed on the TCS PREMAP platform. The macro file of FSW was also fed into it along with one post processing script. The post processing script takes care of getting the strain, strain rate and temperature value at node/nodes/elements. All the simulations were run in the TCS PREMAP in a batch file. The outputs of simulation results were saved in the TCS PREMAP platform.

To incorporate analytics in the system of present disclosure, a "knowledge base" was built for FSW comprising of 42 parametric combinations, corresponding sensory data, soft sensor data and weld quality. It was used in training DNN models. There are always some gaps exist between simulated and real data due to facts that all the factors affecting the process or machine such as machine degradation state, variation in environmental conditions, human factors etc. An attempt was made to minimize the real to simulation gap and use simulation to train DNN model to improve robustness and accuracy. Deep neural network learns the patterns of gap that is due to that all the factors affecting the process or machine such as machine degradation state, variation in environmental conditions, human factors are difficult to model. The learnt gap is stored in deep neural nets. The leant gap is further used to argument High Fidelity Simulation/First order models to minimize the gap between real and simulation. A commercial platform was used for data contextualization which is TCS PREMAP meta models. The AI models help in predicting behavior of physics system or process with real time data from its counterpart. Self-leaning module continuously check the performance of hybrid AI model.

**Experimental Results:**

The system and method of the present disclosure have been tested with several experiments and the results are provided. During experiments, two samples were welded by selecting the combination of following input parameters: (a) 600 rpm ($\omega$) and 200 mm/min ($v$) (b) 600 rpm ($\omega$) and 150 mm/min, respectively. These parameters were selected randomly from a database and produced the weld with the upper tensile strength (UTS) of 145 to 150 MPa as per the initial database which corresponds to the joint strength efficiency of 50 to 55 % as compared with the base material. However, to validate the digital twin (DT), desired value of UTS 220 MPa and 190 MPa were fed to the system. The initial input parameters were fed into the TCS PREMAP GUI interface and have been transferred to the machine controller through the TCP/IP protocol to start the weld with the desired UTS value. There was also prescribed a 75 s delay time to cover the initial phases of welding which includes the plunging, dwelling, and 15s of welding time to enable the scheme for controlling the weld in real time. As the welding begins, the data is received in the TCS PREMAP platform which continuously predicts the UTS of the weld being fabricated.

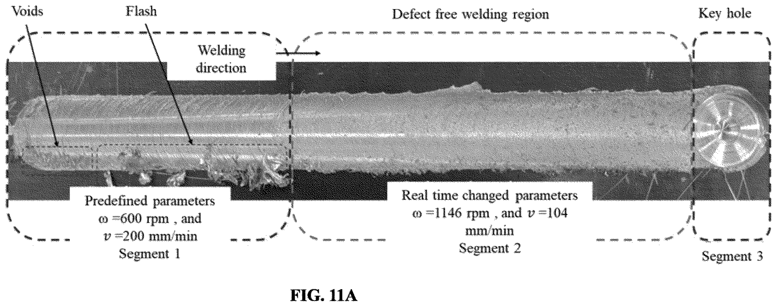

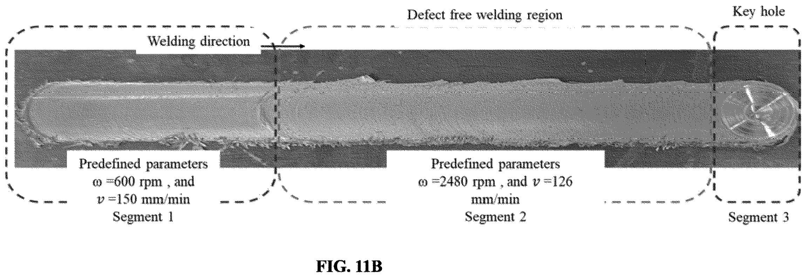

FIGS. 11A and 11B depict pictures of welded sample to achieve different UTS values for monitoring and controlling the FSW process using the contextual hybrid digital twin according to some embodiments of the present disclosure. The picture of welded sample to achieve the desire UTS of 220 MPa is shown in FIG. 11A. The initial parameters were intentionally chosen in such a way that a bad weld is produced. It can be seen in the FIG. 11A that segment 1 contains voids, flash, and appearance of rough surface. However, in segment 2 of FIG. 11A, the welding parameters have been changed to 1146 rpm ($\omega$) and 104 mm/min ($v$) in the real time to achieve the desired UTS. Segment 2 clearly indicates the improvement in the surface appearance with defect free weld. Similarly, the welded sample to achieve the 190 MPa UTS is depicted in FIG. 11B. It can also be seen in FIG. 11B that the parameters have been changed in real time to achieve the desire UTS. Segment 2 of the FIG. 11B has no surface defect however segment 1 is also appeared smooth surface finishing because of selection of lower welding speed as compared with FIG. 11A.

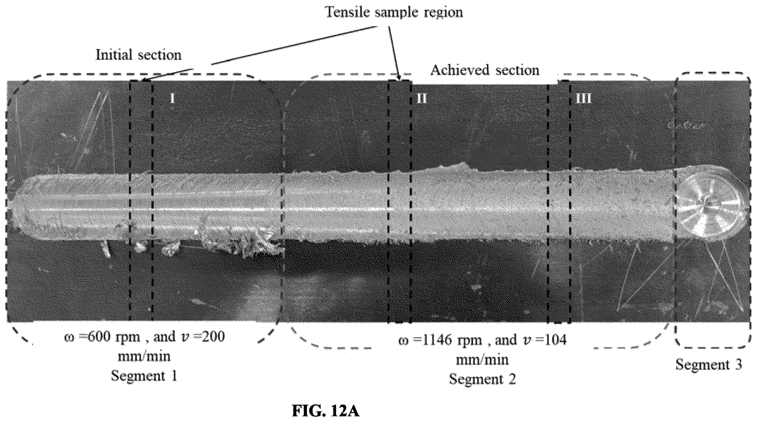

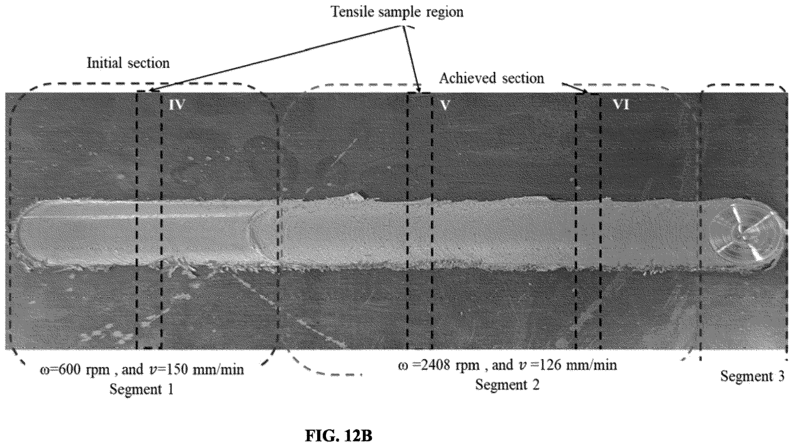

To validate the efficiency of the prediction, the tensile samples were cut from the different region of the weld to determine the deviation from the actual UTS value. FIGS. 12A and 12B depict pictures of welded sample indicating the tensile sample region to achieve different UTS values for monitoring and controlling the FSW process using the contextual hybrid digital twin according to some embodiments of the present disclosure. The predicted and actual UTS value of the weld are provided in Table 2 below.

Table 2

| Region | Actual UTS (MPa) | Predicted UTS (MPa) | Error in percentage |
|---|---|---|---|
| I | 151.03 | 146.2 | 3.19 |
| II | 211.93 | 220 | -3.80 |
| III | 214.01 | 220 | -2.79 |
| IV | 156.47 | 150.7 | 3.68 |
| V | 184.82 | 190 | -2.80 |
| VI | 182.86 | 190 | -3.91 |

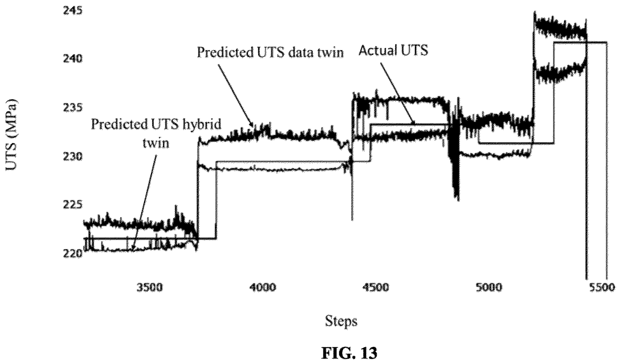

In Table 2, the regions I and IV represent initial section of the welds and the actual UTS was found to be around 150 to 156 MPa, respectively. The absolute average percentage error was 3.4 %. Two tensile samples were extracted from the achieved section in both cases. In the first case, the desired UTS was 220 MPa and the actual UTS were found 211.93 and 214.01 MPa. The absolute average error of prediction in this case tends to be 3.3 %. However, in the second case, the desired UTS was 190 MPa and the actual UTS were found 184.82 and 182.86 MPa. In this case, the absolute average error of prediction for this case tends to be 3.5 %. FIG. 13 depicts a graphical representation illustrating a comparison of the predicted and the actual UTS value of the weld with and without soft sensor data according to some embodiments of the present disclosure. It is observed from FIG. 13 that in UTS prediction, Root Mean Square Error (RMSE) of the contextual hybrid twin model was 1.37 during testing of model with test data and was 4.48 for data driven model. So, there is significant drop of 68 % in RMSE which signifies that model training is significantly improved while using the contextual hybrid digital twin based models.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g., hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

**Claims**

1. A processor implemented method (300), comprising:

   obtaining (302), via one or more hardware processors, a first set of data and a second set of data pertaining to a manufacturing process from a plurality of data generation sources;
   inputting (304), via the one or more hardware processors, the first set of data to a first set of models and the second set of data, to train a second set of models;
   obtaining (306), via the one or more hardware processors, (i) a plurality of simulated data from the first set of models, and (ii) a plurality of real time experimental data from the second set of models;
   determining (308), via the one or more hardware processors, a gap between the plurality of simulated data and the plurality of real time experimental data, based on a comparison of one or more key performance indicator vectors of the plurality of simulated data and the plurality of real time experimental data;
   learning (310), via the one or more hardware processors, the determined gap by learning one or more gap behavioral patterns associated with the plurality of simulated data and the plurality of real time experimental data;
   minimizing (312), via the one or more hardware processors, learnt gap by augmenting the one or more gap behavioral patterns associated with the plurality of simulated data with the first set of models to obtain an augmented set of models;
   creating (314), via the one or more hardware processors, a contextual hybrid digital twin for the manufacturing process using a third set of data, wherein the third set of data is obtained by processing the augmented set of models using one or more soft sensing devices, and wherein the contextual hybrid digital twin comprises an information digital twin, a hybrid digital twin, and a self-learning enabler; and
   performing (316), via the one or more hardware processors, at least one of (i) monitoring and (ii) controlling a performance of the manufacturing process using a performance analytics module and a plurality of decision making enablers of the contextual hybrid digital twin respectively in real time.

2. The processor implemented method as claimed in claim 1, wherein the first set of data is obtained as a plurality of data generated from a Design of Experiments (DoE) performed for the manufacturing process.

3. The processor implemented method as claimed in claim 1, wherein the second set of data is obtained from at least one of (i) one or more machines associated with the manufacturing process in real time, (ii) a plurality of sub-processes associated with the manufacturing process in real time, and (iii) the plurality of first set of data being continuously processed by the one or more machines, and the plurality of sub-processes associated with the manufacturing process.

4. The processor implemented method as claimed in claim 1, wherein the first set of models comprises one or more physics based models, and the second set of models comprises (i) one or more machine learning models and (ii) one or more neural network models.

5. The processor implemented method as claimed in claim 1, wherein the information digital twin is a complex graph model having a hierarchical structure storing information on relationship between one or more entities associated with the manufacturing process.

6. The processor implemented method as claimed in claim 1, wherein the information digital twin provides context to a generated data for reasoning and querying the generated data using a semantic layer.

7. A system (100), comprising:

   a memory (102) storing instructions;
   one or more communication interfaces (106);
   one or more sensors (108); and
   one or more hardware processors (104) coupled to the memory (102) via the one or more communication interfaces (106), wherein the one or more hardware processors (104) are configured by the instructions to:

      obtain a first set of data and a second set of data pertaining to a manufacturing process from a plurality of data generation sources;
      input the first set of data to a first set of models and the second set of data to train a second set of models;
      obtain (i) a plurality of simulated data from the first set of models and (ii) a plurality of real time experimental data from the second set of models;
      determine a gap between the plurality of simulated data and the plurality of real time experimental data based on a comparison of key performance indicator vectors of the plurality of simulated data and the plurality of real time experimental data;
      learn the determined gap by learning one or more gap behavioral patterns associated with the plurality of simulated data and the plurality of real time experimental data;
      minimize learnt gap by augmenting the one or more gap behavioral patterns associated with the plurality of simulated data with the first set of models to obtain an augmented set of models;
      create a contextual hybrid digital twin for the manufacturing process using a third set of data, wherein the third set of data is obtained by processing the augmented set of models using one or more soft sensing devices, and wherein the contextual hybrid digital twin comprises an information digital twin, a hybrid digital twin, and a self-learning enabler; and
      perform at least one of (i) monitoring and (ii) controlling a performance of the manufacturing process using a performance analytics module and a plurality of decision making enablers of the contextual hybrid digital twin respectively in real time.

8. The system as claimed in claim 7, wherein the first set of data is obtained as a plurality of data generated from a Design of Experiments (DoE) performed for the manufacturing process.

9. The system as claimed in claim 7, wherein the second set of data is obtained from at least one of (i) one or more machines associated with the manufacturing process in real time, (ii) a plurality of sub-processes associated with the manufacturing process in real time, and (iii) the plurality of first set of data being continuously processed by the one or more machines, and the plurality of sub-processes associated with the manufacturing process.

10. The system as claimed in claim 7, wherein the first set of models comprises one or more physics based models, and the second set of models comprises (i) one or more machine learning models and (ii) one or more neural network models.

11. The system as claimed in claim 7, wherein the information digital twin is a complex graph model having a hierarchical structure storing information on relationship between one or more entities associated with the manufacturing process.

12. The system as claimed in claim 7, wherein the information digital twin provides context to a generated data for reasoning and querying the generated data using a semantic layer.

13. One or more non-transitory computer readable mediums comprising one or more instructions which when executed by one or more hardware processors cause:

   obtaining a first set of data and a second set of data pertaining to a manufacturing process from a plurality of data generation sources;
   inputting the first set of data to a first set of models and the second set of data, to train a second set of models;
   obtaining (i) a plurality of simulated data from the first set of models, and (ii) a plurality of real time experimental data from the second set of models;
   determining a gap between the plurality of simulated data and the plurality of real time experimental data, based on a comparison of one or more key performance indicator vectors of the plurality of simulated data and the plurality of real time experimental data;
   learning the determined gap by learning one or more gap behavioral patterns associated with the plurality of simulated data and the plurality of real time experimental data;
   minimizing learnt gap by augmenting the one or more gap behavioral patterns associated with the plurality of simulated data with the first set of models to obtain an augmented set of models;
   creating a contextual hybrid digital twin for the manufacturing process using a third set of data, wherein the third set of data is obtained by processing the augmented set of models using one or more soft sensing devices, and wherein the contextual hybrid digital twin comprises an information digital twin, a hybrid digital twin, and a self-learning enabler; and
   performing at least one of (i) monitoring and (ii) controlling a performance of the manufacturing process using a performance analytics module and a plurality of decision making enablers of the contextual hybrid digital twin respectively in real time.

System 100

Processor 104

I/O interface 106

Memory 102

System Database 110

Sensors 108

Performance Analytics Module 112A

FIG. 1

**FIG. 2**

Obtaining, a first set of data and a second set of data pertaining to a manufacturing process from a plurality of data generation sources — 302

Inputting, the first set of data to a first set of models and the second set of data to train a second set of models — 304

Obtaining, (i) a plurality of simulated data from the first set of models and (ii) a plurality of real time experimental data from the second set of models — 306

Determining, a gap between the plurality of simulated data and the plurality of real time experimental data based on a comparison of key performance indicator vectors of the plurality of simulated data and the plurality of real time experimental data — 308

Learning, the determined gap by learning one or more gap behavioral patterns associated with the plurality of simulated data and the plurality of real time experimental data — 310

Minimizing, learnt gap by augmenting the one or more gap behavioral patterns associated with the plurality of simulated data with the first set of models to obtain an augmented set of models — 312

Creating, a contextual hybrid digital twin for the manufacturing process using a third set of data, wherein the third set of data is obtained by processing the augmented set of models using one or more soft sensing devices, and wherein the contextual hybrid digital twin comprises an information digital twin, a hybrid digital twin, and a self-learning enabler — 314

Performing, at least one of (i) monitoring and (ii) controlling a performance of the manufacturing process using a performance analytics module and a plurality of decision making enablers of the contextual hybrid digital twin respectively in real time — 316

**FIG. 3**

300

**FIG. 4**

**FIG. 5**

## Automatic Mode

### Control Panel

**Parameter**

0

**Spindle RPM**

1479  rpm

**Bytes written**

11

**X-Axis Vel**

163 mm/min

**message**

| Sensor Output | | |
|---|---|---|
| Z Axis Pos | 0 | mm |
| Z-Axis Load | -301.748 | N |
| X-Axis Pos | 142.001 | mm |
| X-Axis Load | -1.4952 | N |
| X-Axis Torque | 0 | Nm |
| X-Axis Vel | -0.343 | mm/min |
| SPA Torque | 0 | Nm |
| SPA RPM | 0.0206 | RPM |

**FIG. 6**

**FIG. 7**

Fine meshed region

Partitioned region

$v_x=0$ (side face)

Velocity inflow

$v_y=0$ (side face)

Meshed plate

Welding direction

$v_x=0$ (bottom side face)

Velocity outflow

$v_x=0$ (side face)

$v_y=0$ (side face)

Coarser mesh region

**FIG. 8**

Temperature contour plot

**FIG. 9A**

Strain contour plot

**FIG. 9B**

**FIG. 9C**

FIG. 10

Real Time monitoring and control of FSW weld quality

Voids    Flash                                    Defect free welding region                              Key hole

Welding
direction

Predefined parameters
ω =600 rpm , and
ν =200 mm/min
Segment 1

Real time changed parameters
ω =1146 rpm , and ν =104
mm/min
Segment 2

Segment 3

**FIG. 11A**

FIG. 11B

FIG. 12A

FIG. 12B

FIG. 13

Europäisches
Patentamt

European
Patent Office

Office européen
des brevets

# EUROPEAN SEARCH REPORT

Application Number

EP 24 15 3700

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROY ROHAN BASU ET AL: "Digital twin: current scenario and a case study on a manufacturing process", THE INTERNATIONAL JOURNAL OF ADVANCED MANUFACTURING TECHNOLOGY, SPRINGER, LONDON, vol. 107, no. 9-10, 1 April 2020 (2020-04-01), pages 3691-3714, XP037133513, ISSN: 0268-3768, DOI: 10.1007/S00170-020-05306-W [retrieved on 2020-04-20] * the whole document * | 1-13 | INV. G05B19/418 |
| A | FETT MICHEL ET AL: "Extension of the system boundary of the Digital Twin onto the sensors of the Physical Twin through the introduction of redundant soft sensors", FORSCHUNG IM INGENIEURWESEN: ENGINEERING RESEARCH, vol. 87, no. 1, 1 March 2023 (2023-03-01), pages 479-488, XP093175875, DE ISSN: 0015-7899, DOI: 10.1007/s10010-023-00653-y Retrieved from the Internet: URL:https://link.springer.com/article/10.1007/s10010-023-00653-y/fulltext.html> * the whole document * | 1-13 | |
| | | | TECHNICAL FIELDS SEARCHED (IPC) |
| | | | G05B |

The present search report has been drawn up for all claims

| Place of search | Date of completion of the search | Examiner |
|---|---|---|
| The Hague | 20 June 2024 | De Santis, Agostino |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 446 836 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 202321027161
- US 10579745 B2